# EUROPEAN PATENT APPLICATION

(11) **EP 1 515 418 A2**
(43) Date of publication of application: **16.03.2005**
(21) Application number: 04021567.5
(22) Date of filing: 10.09.2004
(51) Int. Cl.: H02K 15/02

(54) **Manufacturing method for a motor layered core, manufacturing apparatus thereof, and stacking jig thereof**

(30) Priority: 25.12.2003 JP 2003431655; 10.09.2003 JP 2003318111
(71) Applicant: AISIN AW CO., LTD., Anjo-shi, Aichi-ken 444-1192 (JP)
(72) Inventor: Hashimoto, Shingo, Anjo-shi Aichi-ken 444-1192 (JP); Koura, Norio, Anjo-shi Aichi-ken 444-1192 (JP); Kuroyanagi, Tooru, Anjo-shi Aichi-ken 444-1192 (JP)
(74) Representative: HOFFMANN - EITLE

(57) **Abstract**

A stacking jig set at a waiting position is moved upward to a stacking position. Following the stacking jig reaching the stacking position, a second stator-core punch is moved downward so as to punch out a stator-core layer sheet from a metal material. The ring-shaped stator-core layer sheet thus punched out is fit to a cylinder of the stacking jig with a center opening. Furthermore, the stator-core layer sheet is held by the stacking jig with bolt-insertion openings fit to positioning rods. The stator-core layered sheets thus punched out are moved along the punching direction without change so as to be consecutively fit to and stacked on the stacking jig. Thus, layer sheets can be suitably stacked with axes and rotational positions aligned, without deterioration in manufacturing efficiency for a motor layered core, while preventing insulating coating from tearing.

## Description

### INCORPORATION BY REFERENCE

The disclosure of Japanese Patent Application No. 2003-431655 filed on December 25, 2003, including the specification, drawings and abstract thereof, is incorporated herein by reference in its entirety.

### BACKGROUND OF THE INVENTION

### 1. Field of the Invention

The present invention relates to a manufacturing method and a manufacturing machine for manufacturing a layered core used for a stator core or a rotor core of a motor, and a stacking jig thereof.

### 2. Description of the Related Art

Such a manufacturing method and manufacturing machine for manufacturing a layered core used for a motor are disclosed in Japanese Unexamined Patent Application Publication No. 8-228461, for example. A long belt-shaped steel sheet is punched by a die machine (progressive press) so as to form iron core sheets. The predetermined number of the iron core sheets thus formed are multi-layered, whereby the layered core for a motor (stator core or rotor core) having a layered structure is formed. The iron core sheets forming the stator core having such a layered structure are welded one to another on the perimeter thereof along the axial direction. Accordingly, each of the iron core sheets need to be layered with the axes thereof matching one another and with the rotational position thereof matching one another. Accordingly, each iron-core sheet includes a protrusion and a recess back to back. The iron-core sheets having such a structure are pressed so as to be fixed one to another with the protrusions and the recesses of the adjacent iron-core sheets fit one to another.

In general, the surface of each iron core sheet forming the layered core having the layered structure is coated with an insulating film for improving the performance of a motor. Accordingly, fixing the iron-core sheets one to another with the protrusions and the recesses fit one to another by crimping with a press may leads to a problem that the aforementioned insulating film tears around the portion where the protrusion is fit to the recess. Note that such a defect in the insulating film leads to deterioration in the performance of the motor. Accordingly, a manufacturing machine is disclosed in Japanese Unexamined Patent Application Publication No. 7-298568 (Claim 1, Fig. 1), wherein a motor layered core is manufactured while preventing the aforementioned insulating film from tearing, for example.

The manufacturing machine disclosed in Japanese Unexamined Patent Application Publication No. 7-298568 (Claim 1, Fig. 1) has a configuration wherein a stacking jig (stacking unit) is disposed at a stacking position underneath the aforementioned die machine (punching unit) along the punching direction thereof for consecutively stacking the iron-core sheets punched out by the aforementioned die machine. Accordingly, the iron-core sheets punched out by the aforementioned die machine are consecutively stacked on the stacking jig disposed along the punching direction thereof, thereby allowing the user to perform both the step for punching out iron-core sheets and the step for stacking the iron-core sheets thus punched out at the same time. Furthermore, a heating unit (coil) is disposed on the side of the stacking jig disposed at the aforementioned stacking position for heating the iron-core sheets stacked on the stacking jig, thereby allowing the user to heat the predetermined number of iron-core sheets stacked and aligned on the stacking jig for welding without movement thereof from the stacking position.

However, the manufacturing machine disclosed in Japanese Unexamined Patent Application Publication No. 7-298568 (Claim 1, Fig. 1) has a problem as follows. That is to say, the aforementioned stacking jig is disposed underneath the die machine (i.e., the movement distance of the iron-core sheet punched out is long), and accordingly, the punch of the die machine for punching out the iron-core sheet is designed with an excessively long stroke length. Such excessive punch stroke length leads to a problem for taking an excessively long period of time for returning the punch to a predetermined position for punching out the next iron-core sheet following punching out the current iron-core sheet, resulting in a problem of deterioration in manufacturing efficiency for the motor layered core.

Furthermore, with such a manufacturing machine, the predetermined number of the iron-core sheets punched out by the aforementioned die machine are stacked at the aforementioned stacking position, and is heated at the same stacking position for welding. This configuration leads to a problem that in a case wherein layered cores are consecutively manufactured, the die machine needs to stop the step wherein the iron-core sheets for the next motor layered core are punched out and stacked on the stacking jig until the aforementioned predetermined number of current iron-core sheets (motor layered core) are moved from the stacking position to another position following completion of heating/welding processing for the aforementioned number of current iron core sheets (i.e., such a manufacturing machine requires a waiting time).

### SUMMARY OF THE INVENTION

The present invention has been made to solve the aforementioned problems, and accordingly, it is an object thereof to provide a manufacturing method and manufacturing machine for manufacturing a motor layered core, and a stacking jig thereof, which allow the user to stack the iron-core sheets with the axes thereof suitably matching one another, and with the rotational positions thereof suitably matching one another, while preventing the insulating film from tearing, and maintaining manufacturing efficiency for the motor layered core.

In order to achieve the aforementioned objects, according to a first aspect of the present invention, with a manufacturing method for a motor layered core, a sheet metal material is punched so as to form a layer sheet in a predetermined shape, and multiple the layer sheets are stacked so as to form a motor layered core, a stacking jig is set at a lower-side stacking position along the punching direction underneath a die machine for punching the metal material for holding the layer sheets with the aligned axes and aligned rotational positions, with the stacking jig being moved upward to the upper-side stacking position along the punching direction within the die machine, and with the layer sheet punched out by the die machine being moved along the punching direction so as to be consecutively stacked on the stacking jig set at the upper-side stacking position without movement of the stacking jig.

The stacking jig may be moved from the lower-side stacking position to the upper-side stacking position such that the upper-end face of the stacking jig is moved at least to a straight portion extending along the punching direction in generally the same shape as the outline shape of the layer sheet, which is a part of an insertion hole formed within the die machine.

The stacking jig according may be moved from the lower-side stacking position to the upper-side stacking position such that the upper-end face of the stacking jig and the upper-end face of the lower die of the die machine are positioned on a single generally flat plane extending in the horizontal direction.

The stacking jig may be set such that at the time of stacking the layer sheets at the upper-side stacking position, the stacking jig overlaps with the punch positioned within the die machine along the punching direction along which the layer sheet is to be punched out.

According to a second aspect of the present invention, with a manufacturing method for a motor layered core, a sheet metal material is punched so as to form a layer sheet in a predetermined shape, and multiple the layer sheets are stacked so as to form a motor layered core, with a stacking jig being set at a stacking position along the layer-sheet punching direction for holding the layer sheets with the aligned axes and aligned rotational positions, and with the layer sheets thus punched out being moved in the punching direction so as to be consecutively stacked on the stacking jig without movement of the stacking jig, and with the stacking jig holding a predetermined layer sheets stacked thereon being moved to a next-step position away from the layer-sheet punching direction for performing processing in the next step.

The predetermined number of layer sheets stacked on the stacking jig may be subjected to processing in the next step.

According to a third aspect of the present invention, a manufacturing apparatus for a motor layered core, with a sheet metal material being punched so as to form a layer sheet in a predetermined shape, and with multiple layer sheets being stacked so as to form a motor layered core, comprises: a die machine for punching the metal material; a stacking jig set at a stacking position along the punching direction, along which the layer is to be punched out by the die machine, for stacking and holding the layer sheets which have been moved along the punching direction with aligned axes and aligned rotational positions; and jig moving means for moving the stacking jig between an upper-side stacking position within the die machine and a lower-side stacking position underneath the die machine along the layer-sheet punching direction.

The stacking jig may be moved by the jig moving means from the lower-side stacking position to the upper-side stacking position such that the upper-end face of the stacking jig is moved at least to a straight portion extending along the punching direction in generally the same shape as the outline shape of the layer sheet, which is a part of an insertion hole formed within the die machine.

The stacking jig may be moved by the jig moving means from the lower-side stacking position to the upper-side stacking position such that the upper-end face of the stacking jig and the upper-end face of the lower die of the die machine are positioned on a single generally flat plane extending in the horizontal direction.

The stacking jig may be disposed such that at the time of the jig moving means moving the stacking jig to the upper-side stacking position, the stacking jig overlaps with a punch positioned within the die machine along the layer-sheet-punching direction.

According to a fourth aspect of the present invention, a manufacturing apparatus for a motor layered core, with a sheet metal material being punched so as to form a layer sheet in a predetermined shape, and with multiple the layer sheets being stacked so as to form a motor layered core, comprises: a die machine for punching the metal material; a stacking jig set at a stacking position along the punching direction, along which the layer sheet is to be punched out by the die machine, for stacking and holding the layer sheets which have been moved along the punching direction with aligned axes and aligned rotational positions; and jig moving means for moving the stacking jig holding a predetermined number of the layer sheets from the stacking position to a next-step position away from the layer-sheet punching direction for performing processing in the next step.

The stacking jig may include a positioning member having functions for aligning the axes and rotational positions of the layer sheets, with the positioning member being provided so as to extend along the layer-sheet punching direction, and with the positioning member having a configuration for being engaged along the horizontal direction with the perimeter of the layer sheet stacked on the stacking jig.

According to a fifth aspect of the present invention, a stacking jig for holding layer sheets stacked along the punching direction, the layer sheets being punched out in a predetermined shape from a sheet metal material by a die machine so as to form a motor layered core, includes a positioning member for being engaged along the horizontal direction with the perimeter other than the outer perimeter which defines the outline shape of the stacked layer sheets, thereby enabling positioning of the layer sheets with aligned axes and aligned rotational positions.

The positioning member may have a configuration for being engaged along the horizontal direction with at least one of the inner perimeter which defines the inner outline of the layer sheet and the opening perimeter which defines the shape of an opening punched on the layer sheet.

The positioning member may be formed of a first positioning member for aligning the axes of the layer sheets, and a second positioning member for aligning the rotational positions of the layer sheets.

The stacking jig may further include an auxiliary positioning member provided so as to extend along the layer-sheet punching direction for being engaged along the horizontal direction with the outer perimeter of the layer sheet, thereby assisting at least alignment of the axis, as well as alignment of the axis and alignment of the rotational position performed by the positioning member.

The stacking jig may further include a guide hole for guiding the layer sheet punched out by a punch included in the die machine, wherein at least the upper portion of the guide hole is formed in generally the same shape as the outline shape of the layer sheet, with the guide hole including a groove formed on the inner face thereof up to a predetermined height underneath the lower dead point of the punch for punching out the layer sheet, which allows insertion of the auxiliary positioning member.

The layer sheet may be a stator-core layer sheet, with the first positioning member being engaged along the horizontal direction with the inner perimeter which defines the inner outline of the stator-core layer sheet, and with the second positioning member being engaged along the horizontal direction with the opening perimeter which defines the shape of an opening punched on the stator-core layer sheet.

The layer sheet may be a stator-core layer sheet including multiple openings and teeth having protrusions at the tips thereof formed by punching so as to protrude along the circumference direction of the stator-core layer sheet, with the first positioning member being engaged along the horizontal direction with the tip corners of the protrusions of the teeth adjacent one to another, and with the second positioning member being engaged along the horizontal direction with the opening perimeter which defines the shape of the opening.

The layer sheet may be a stator-core layer sheet including teeth having protrusions at the tips thereof formed by punching so as to protrude along the circumference direction of the stator-core layer sheet, with the first positioning member being engaged along the horizontal direction with the base ends of the teeth on both sides, and with the second positioning member being engaged along the horizontal direction with the tip corners of the protrusions of the teeth adjacent one to another. Or, the second positioning member may be engaged along the horizontal direction with the side perimeters of the protrusions of the teeth adjacent one to another, or be engaged along the horizontal direction with the corners formed in the outside direction of the radius of the aforementioned stator-core layer sheet, which are parts of the protrusions of the teeth adjacent one to another, or be engaged along the horizontal direction with the base ends of the protrusions on both sides, or be engaged along the horizontal direction with the side perimeters of the protrusions each of which extend from the base end of the protrusion along the circumference direction, or be engaged along the horizontal direction by being fit to a slot formed between the side perimeters of the teeth adjacent one to another.

Also, the layer sheet may be a stator-core layer sheet including multiple teeth formed by punching, with the first positioning member being engaged along the horizontal direction with the base ends of the teeth on both sides, and with the second positioning member being engaged along the horizontal direction with the base ends of the teeth on both sides.

The layer sheet may be a stator-core layer sheet including teeth having protrusions at the tips thereof formed by punching so as to protrude in the circumference direction of the stator-core layer sheet, with the first positioning member being engaged along the horizontal direction with the base ends of the teeth on both sides, and with the second positioning member being engaged along the horizontal direction with the bottom of a slot formed between the teeth adjacent one to another. Or, the second positioning member may be engaged along the horizontal direction with the side perimeters which define the outline shape of the teeth adjacent one to another so as to be fit to a slot formed between the teeth adjacent one to another.

The layer sheet may be a stator-core layer sheet including multiple openings and multiple teeth formed by punching, with the first positioning member being engaged along the horizontal direction with the base ends of the teeth on both sides, and with the second positioning member being engaged along the horizontal direction with the opening perimeters which define the shape of the openings.

The layer sheet may be a stator-core layer sheet including multiple openings formed by punching, with the first positioning member being engaged along the horizontal direction with the opening perimeters which define the shape of the openings, and with the second positioning member being engaged along the horizontal direction with the opening perimeters which define the shape of the openings.

The layer sheet may be a stator-core layer sheet including multiple openings and teeth having protrusions at the tips thereof so as to protrude along the circumference direction of the stator-core layer sheet, which are formed by punching, with the first positioning member being engaged along the horizontal direction with the opening perimeters which define the shape of the openings, and with the second positioning member being engaged along the horizontal direction with the tip corners of the protrusions of the teeth adjacent one to another. Or, the second positioning member may be engaged along the horizontal direction with the side perimeters of the protrusions of the teeth adjacent one to another, or may be engaged along the horizontal direction with the corners formed in the outside direction of the radius of the aforementioned stator-core layer sheet, which are parts of the protrusions of the teeth adjacent one to another.

The layer sheet may be a stator-core layer sheet including multiple openings and teeth having protrusions at the tips thereof so as to protrude along the circumference direction of the stator-core layer sheet, which are formed by punching, with the first positioning member being engaged along the horizontal direction with the opening perimeters which define the shape of the openings, and with the second positioning member being engaged along the horizontal direction with the base ends of the protrusions on both sides, or may be engaged along the horizontal direction with the side perimeters of the protrusions each of which extend from the base end of the protrusion along the circumference direction.

The layer sheet may be a stator-core layer sheet including multiple openings and teeth formed by punching, with the first positioning member being engaged along the horizontal direction with the opening perimeters which define the shape of the openings, and with the second positioning member being engaged along the horizontal direction by being fit to a slot formed between the side perimeters of the teeth adjacent one to another, or the second positioning member may be engaged along the horizontal direction with the base ends of the teeth on both sides.

The layer sheet may be a stator-core layer sheet including multiple welding portions formed by punching the outer perimeter which defines the outline shape of the stator-core layer sheet, with the auxiliary positioning member being engaged along the horizontal direction with the welding portions, or the auxiliary positioning member may be engaged along the horizontal direction with the base ends of the flanges on both sides, or may be engaged along the horizontal direction with the perimeters of the flanges on both sides.

The layer sheet may be a stator-core layer sheet including multiple flanges formed by punching the outer perimeter which defines the outline shape of the stator-core layer sheet, with the auxiliary positioning member being engaged along the horizontal direction with the tip corners of the flanges.

The layer sheet may be a stator-core layer sheet including multiple flanges formed in the shape of an arc by punching the outer perimeter which defines the outline shape of the stator-core layer sheet, with the auxiliary positioning member being engaged along the horizontal direction with the tips formed in the shape of an arc on the flanges.

The layer sheet may be a stator-core layer sheet including multiple welding portions and multiple flanges by punching the outer perimeter which defines the outline shape of the stator-core layer sheet, with the auxiliary positioning member being engaged along the horizontal direction with the perimeter between the welding portions, other than the flanges.

The present invention has the advantage of stacking layer sheets (iron-core sheets) with suitably aligned axes and suitably aligned rotational positions without deterioration in manufacturing efficiency for a motor layered core while preventing insulating coating from tearing.

### BRIEF DESCRIPTION OF THE DRAWINGS

Fig. 1 is a schematic configuration diagram which shows a manufacturing apparatus according to an embodiment;
Fig. 2A is a partial cutaway perspective view which shows principal units including a stacking jig at a waiting position;
Fig. 2B is a plan view which shows a stator-core layer sheet;
Fig. 3A is a cross-sectional view which shows the stacking jig set at the waiting position;
Fig. 3B is a cross-sectional view which shows the stacking jig set at the stacking position;
Fig. 4 is a partial cutaway perspective view which shows principal units including the stacking jig holding a preliminary stator core at the waiting position;
Fig. 5 is a partial cutaway perspective view which shows principal units including the stacking jig holding the preliminary stator core at a welding position;
Fig. 6A is a partial cutaway perspective view which shows principal units including the preliminary stator core in a step for welding;
Fig. 6B is a cross-sectional view which shows the preliminary stator core in the step for welding;
Fig. 7 is a plan view which shows the stacking jig according to the present embodiment;
Fig. 8 is a cross-sectional view taken along line A-A in Fig. 7;
Fig. 9A is a plan view which shows a first modification of the stacking jig holding the stator-core layer sheets stacked thereon;
Fig. 9B is a plan view which shows a second modification thereof;
Fig. 9C is a plan view which shows a third modification thereof;
Fig. 9D is a plan view which shows a fourth modification thereof;
Fig. 10A is a plan view which shows a fifth modification of the stacking jig holding the stator-core layer sheets stacked thereon;
Fig. 10B is a plan view which shows a sixth modification thereof;
Fig. 10C is a plan view which shows a seventh modification thereof;
Fig. 10D is a plan view which shows an eighth modification thereof;
Fig. 11A is a plan view which shows a ninth modification of the stacking jig holding the stator-core layer sheets stacked thereon;
Fig. 11B is a plan view which shows a tenth modification thereof;
Fig. 11C is a plan view which shows an eleventh modification thereof;
Fig. 11D is a plan view which shows a twelfth modification thereof;
Fig. 12A is a plan view which shows a thirteenth modification of the stacking jig holding the stator-core layer sheets stacked thereon;
Fig. 12B is a plan view which shows a fourteenth modification thereof;
Fig. 12C is a plan view which shows a fifteenth modification thereof;
Fig. 12D is a plan view which shows a sixteenth modification thereof;
Fig. 13A is a plan view which shows a seventeenth modification of the stacking jig holding the stator-core layer sheets stacked thereon;
Fig. 13B is a plan view which shows an eighteenth modification thereof;
Fig. 13C is a plan view which shows a nineteenth modification thereof;
Fig. 13D is a plan view which shows a twentieth modification thereof;
Fig. 14A is a plan view which shows a twenty-first modification of the stacking jig holding the stator-core layer sheets stacked thereon;
Fig. 14B is a plan view which shows an twenty-second modification thereof;
Fig. 14C is a plan view which shows a twenty-third modification thereof;
Fig. 14D is a plan view which shows a twenty-fourth modification thereof;
Fig. 15A is a plan view which shows a twenty-fifth modification of the stacking jig holding the stator-core layer sheets stacked thereon;
Fig. 15B is a plan view which shows an twenty-sixth modification thereof;
Fig. 16 is a cross-sectional view which shows the stacking jig at the waiting position according to any one of the twenty-first modification through the twenty-sixth modification;
Fig. 17 is a plan view which shows the stacking jig according to another modification; and
Fig. 18 is a cross-sectional view taken along line A-A in Fig. 17.

### DESCRIPTION OF THE PREFERRED EMBODIMENTS

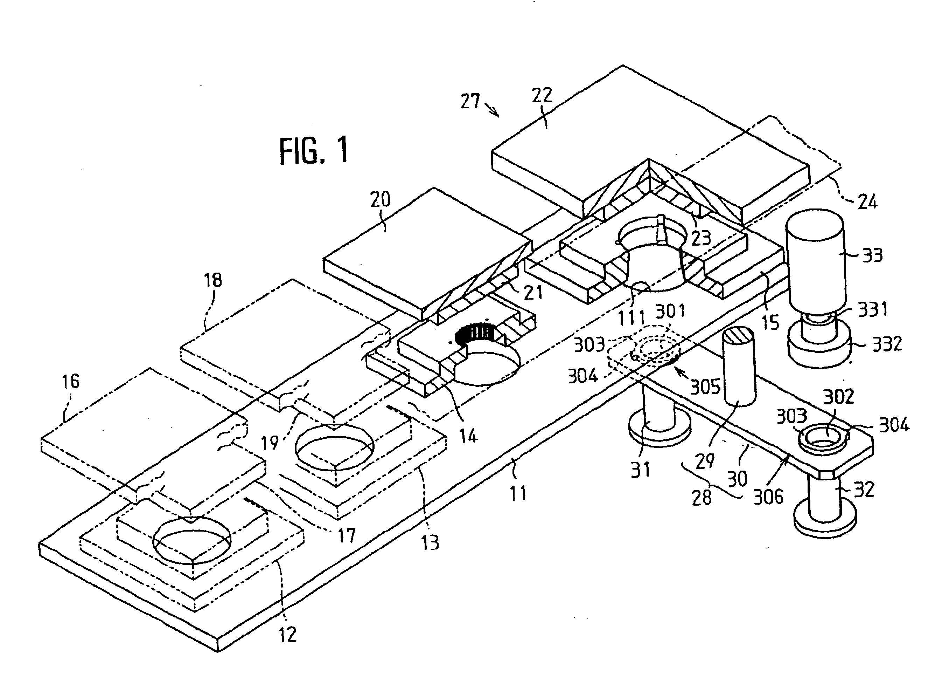

Description will be made below regarding a specific arrangement according to an embodiment of the present invention with reference to Figs. 1 through 8.

As shown in Fig. 1, fixed on a base 11 are: a first rotor-core die 12; a second rotor-core die 13; a first stator-core die 14; and a second stator-core die 15. The first rotor-core die 12, the second rotor-core die 13, the first stator-core die 14, and the second stator-core die 15, are disposed straight along the longitudinal direction of the base 11.

A rotor-core punch holder 16 is disposed just above the first rotor-core die 12, and a first rotor-core punch 17 is fixed on the lower face of the punch holder 16. A rotor-core punch holder 18 is disposed just above the second rotor-core die 13, and a second rotor-core punch 19 is fixed on the lower face of the punch holder 18. A stator-core punch holder 20 is disposed just above the first stator-core die 14, and a first stator-core punch 21 is fixed on the lower face of the punch holder 20. A stator-core punch holder 22 is disposed just above the second stator-core die 15, and a second stator-core punch 23 is fixed on the lower face of the punch holder 22. Each of the punch holders 16, 18, 20, and 22 are moved along the vertical direction with the corresponding driving means (not shown). The first rotor-core punch 17 fixed to the punch holder 16 is integrally moved in the vertical direction, and the second rotor-core punch 19 fixed to the punch holder 18 is integrally moved in the vertical direction. The first stator-core punch 21 fixed to the punch holder 20 is integrally moved in the vertical direction, and the second stator-core punch 23 fixed to the punch holder 22 is integrally moved in the vertical direction.

A sheet-shaped steel metal material 24 is intermittently transported between: the punches 17, 19, 21, and 23; and the corresponding dies 12, 13, 14, and 15, along the direction from the first rotor-core die 12 to the second stator-core die 15. The first rotor-core punch 17 is moved in the vertical direction while keeping the metal material 24 stationary, whereby the metal material 24 is punched so as to form an opening in a predetermined shape corresponding to the first rotor-core punch 17.

Upon the first rotor-core punch 17 reaching the uppermost position, the metal material 24 is moved by a predetermined distance along the direction from the first rotor-core die 12 to the second stator-core die 15. Following this movement, the portion of the metal material 24 where the opening has been formed in the predetermined shape by punching is positioned between the second rotor-core die 13 and the second rotor-core punch 19. Following positioning of the portion of the metal material 24, where the opening in the predetermined shape has been formed by punching, between the second rotor-core die 13 and the second rotor-core punch 19, the second rotor-core punch 19 is moved in the vertical direction, whereby the metal material 24 is punched so as to form a rotor-core layer sheet (not shown) generally in the shape of a circle.

Upon the second rotor-core punch 19 reaching the uppermost position, the metal material 24 is moved by a predetermined distance along the direction from the first rotor-core die 12 to the second stator-core die 15. Following this movement, the portion of the metal material 24 where the aforementioned rotor-core layer sheet has been formed by punching is positioned between the first stator-core die 14 and the first stator-core punch 21. Following positioning of the portion of the metal material 24, where the rotor-core layer sheet has been formed by punching, between the first stator-core die 14 and the first stator-core punch 21, the first stator-core punch 21 is moved in the vertical direction, whereby the metal material 24 is punched so as to form an opening in a predetermined shaped corresponding to the stator-core punch 21.

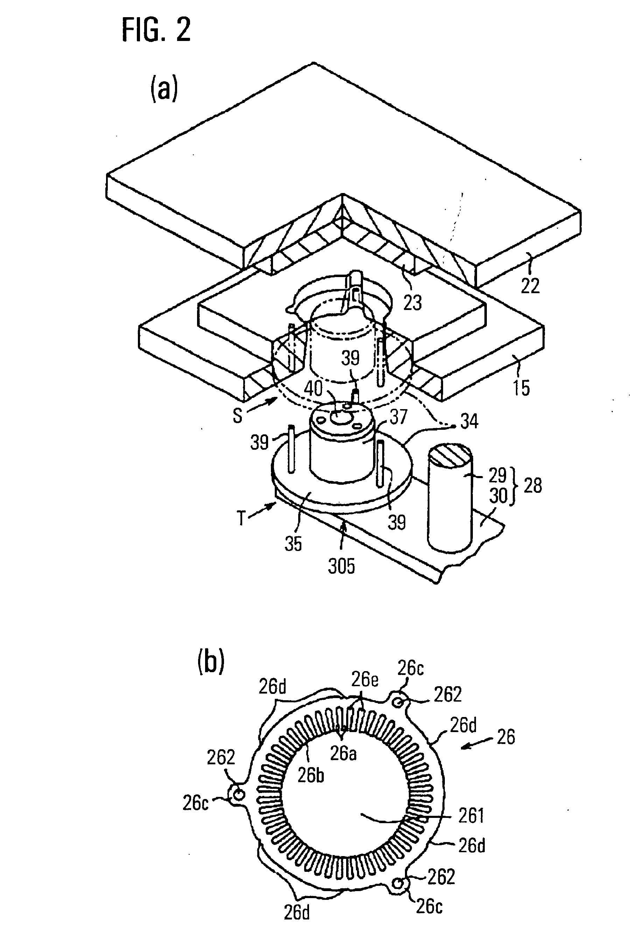

Upon the first stator-core punch 21 reaching the uppermost position, the metal material 24 is moved by a predetermined distance along the direction from the first rotor-core die 12 to the second stator-core die 15. Following this movement, the portion of the metal material 24 where the aforementioned opening has been formed in the predetermined shape by punching is positioned between the second stator-core die 15 and the second stator-core punch 23. Following positioning of the portion of the metal material 24, where the aforementioned opening has been formed in the predetermined shape by punching, between the second stator-core die 15 and the second stator-core punch 23, the second stator-core punch 23 is moved in the vertical direction, whereby the metal material 24 is punched so as to form a stator-core layer sheet 26 (shown in Fig. 2B) generally in the shape of a ring. The stator-core layer sheet 26 includes a center opening 261, bolt insertion openings 262, and multiple teeth 26a. The teeth 26a are formed so as to extend from the outer perimeter of the stator-core layer sheet 26 toward the inner perimeter thereof, each of which include an engaging protrusion 26b protruding from the tip thereof along the circumference direction of the stator-core layer sheet 26. Note that each bolt insertion openings 262 are formed for inserting a bolt at the time of manufacturing a motor.

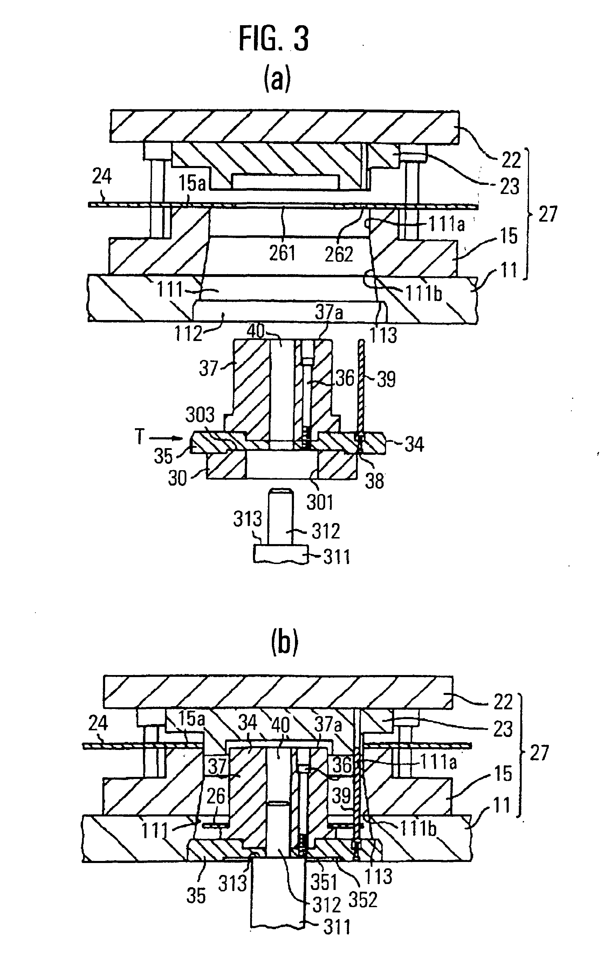

Furthermore, with the aforementioned stator-core layer sheet 26, each of the portions (three portions in the present embodiment) including the bolt insertion openings 262 are formed as a flange 26c protruding toward the outside along the radial direction. On the other hand, predetermined portions (six portions in the present embodiment) on the outer circumference (outer perimeter) other than the flanges 26c serve as welding portions 26d. On the other hand, each pair of the teeth 26a adjacent one to another along the circumference direction forms a slot 26e. The aforementioned base 11, the second stator-core die 15, the punch holder 22, and the second stator-core punch 23, form a die machine 27 (shown in Fig. 3A) for performing punching processing for the aforementioned stator-core layer sheet 26. The stator-core layer sheet 26 punched out by the die machine 27 (second stator-core punch 23) is moved along the punching direction (the lower direction in Fig. 3A).

As shown in Fig. 3A, the base 11 includes a continuously-formed insertion hole 111 and holding hole 112 formed along the vertical direction just underneath the second stator-core die 15. The stator-core layer sheet 26 punched out by the aforementioned second stator-core punch 23 is moved through a guide of the inner face of the insertion hole 111. That is to say, the insertion hole 111 serves as a guide opening for guiding the aforementioned stator-core layer sheet 26 so as to move along the aforementioned punching direction. Note that the insertion hole 111 has a structure wherein the cross-section of the upper portion thereof from a predetermined portion is formed in generally the same shape as with the outline of the stator-core layer sheet 26, whereby a straight portion 111a is formed so as to extend in the axial direction (punching direction) from the predetermined portion. Furthermore, the insertion hole 111 has a structure wherein the cross-section of the lower portion thereof from the predetermined portion is formed so as to gradually expand along the lower direction, whereby a tapered portion 111b is formed. Note that the upper opening of the aforementioned holding hole 112 is formed with a greater diameter than with the lower opening of the insertion hole 111, whereby a step 113 is formed between the holding hole 112 and the insertion hole 111.

As shown in Fig. 1, a carrying device 28 is provided on the side of the die machine 27 including the base 11, the second stator-core die 15, the punch holder 22, and the second stator-core punch 23. The carrying device 28 includes a support shaft 29 for being reciprocally turned by actions of unshown driving means, and a support base 30 held by the support base 29. The support base 30 fixed to the support shaft 29 can be integrally turned. The support base 30 includes setting portions 305 and 306 on both ends thereof, which include insertion holes 301 and 302, respectively. The support base 30 is turned by 180° such that the insertion holes 301 and 302 are alternately positioned just underneath the second stator-core punch 23, whereby switching of the support base 30 is performed. Note that each of the insertion holes 301 and 302 include a ring-shaped ridge 303 around the opening thereof. Furthermore, each ridge 303 includes a protrusion 304 on the perimeter thereof.

An oil-hydraulic cylinder 31 is provided underneath the second stator-core punch 23. As shown in Fig. 3A, the oil-hydraulic cylinder 31 has a function for protruding a rod 311 upward through the insertion hole 301 or 302 positioned just underneath the second stator-core punch 23. The rod 311 includes a small-diameter protrusion 312 formed on the tip thereof. Note that a step 313 is formed between the rod 311 and the protrusion 312.

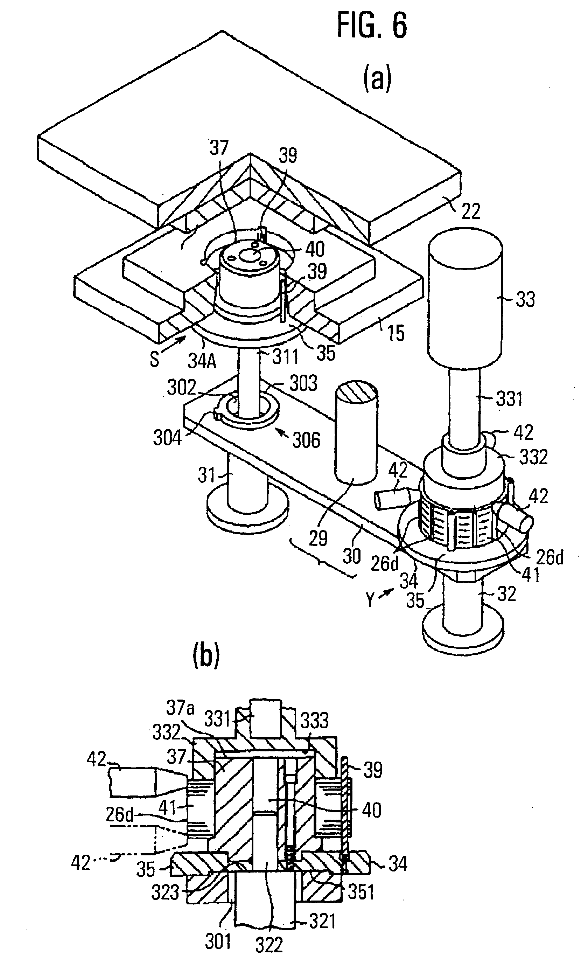

As shown in Fig. 1, while one of the insertion hole 301 and 302 (the insertion hole 301 in Fig. 1) is positioned just underneath the second stator-core punch 23, the other insertion hole 301 or 302 (the insertion hole 302 in Fig. 1) is positioned just above an oil-hydraulic cylinder 32. As shown in Fig. 6B, the oil-hydraulic cylinder 32 has a function for protruding a rod 321 thereof upward through the insertion hole 301 or 302 positioned just above the oil-hydraulic cylinder 32. The rod 321 includes a small-diameter protrusion 322 formed on the tip thereof. Note that a step 323 is formed between the rod 321 and the protrusion 322.

As shown in Fig. 1, an oil-hydraulic cylinder 33 is disposed just above the oil-hydraulic cylinder 32. The oil-hydraulic cylinder 33 includes a rod 331 extending downward. Note that the rod 331 includes a recessed press member 332 fixed on the tip thereof.

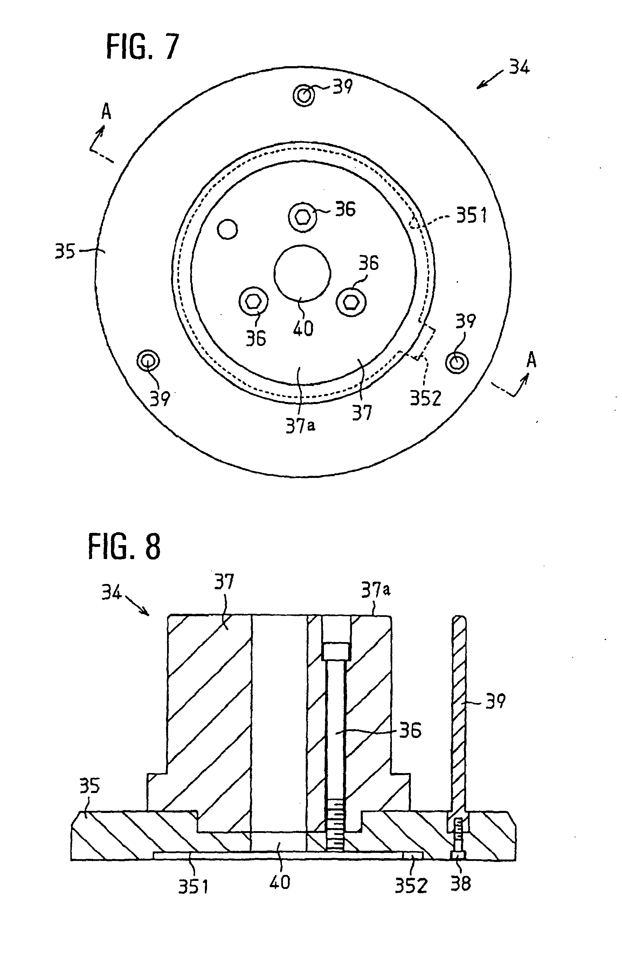

Each of the setting portions 305 and 306 formed on both ends of the support base 30 include a stacking jig 34 set thereon, each of which have a configuration shown in Figs. 7 and 8. As shown in Fig. 8, the stacking jig 34 comprises: a disk 35; a cylinder 37 fixed on the upper face of the disk 35 with multiple screws 36; and multiple positioning rods 39 fixed so as to be erected on the upper face of the disk 35 with screws 38. The cylinder 37 and the positioning rods 39 are provided so as to extend along the aforementioned punching direction. Note that the multiple positioning rods 39 (three positioning rods in the present embodiment) are disposed around the perimeter of the disk 35 serving as a circular plate at an corner pitch of 120°. With the present embodiment, the aforementioned cylinder 37 is formed with a size and a shape so as to be fit to the aforementioned center opening 261. On the other hand, the positioning rod 39 is formed with a size and shape so as to be fit to the bolt insertion opening 262. Accordingly, the stacking jig 34 can support the stator-core layer sheets 26 stacked thereon, each of which have been punched by the aforementioned die machine 27 (the second stator-core punch 23).

That is to say, the aforementioned cylinder 37 serves as a first positioning member for supporting each stator-core layer sheet 26 thus punched out on the stacking jig 34, wherein the stator-core layer sheet 26 is positioned with the inner perimeter (center opening 261) extending in the horizontal direction, which determines the inner outline of the stator-core layer sheet 26, in contact with the cylinder 37, whereby the axis thereof is aligned. On the other hand, each of the aforementioned positioning rods 39 serve as a second positioning member for supporting each stator-core layer sheet 26 including the bolt insertion opening 262 thus formed by punching, wherein the stator-core layer sheet 26 is positioned with the perimeter of the bolt insertion opening 262 extending in the horizontal direction, which determines the shape of the bolt insertion opening 262, in contact with the positioning rod 39, whereby the rotational position thereof is aligned.

Furthermore, a hole 40 is formed through the center portion of the aforementioned disk 35 and the center portion of the cylinder 37. A recess 351 is formed on the lower face of the disk 35. Furthermore, a positioning notch 352 is formed on the perimeter of the recess 351 so as to communicate therewith. Either of the protrusions 312 and 322 of the oil-hydraulic cylinder 33 and 32 can be fit to the recess 351, and the protrusion 304 of the support base 30 can be fit to the positioning notch 352.

Next, description will be made regarding a method for manufacturing a stator core using the stacking jig 34. As shown in Fig. 2, first, the stacking jig 34 set on the setting portion 305 which is one of the setting portions of the support base 30 is positioned just underneath the second stator-core die 15. In this situation, the stacking jig 34 is set such that the ridge 303 is fit to the recess 351 of the disk 35, and the protrusion 304 is fit to the positioning notch 352. Accordingly, the stacking jig 34 is set on the support base 30 without positional deviation and turning.

Let us say that first, the stacking jig 34 is positioned underneath the aforementioned die machine 27 along the punching direction, i.e., at the lower-side stacking position (position shown in Fig. 3A (waiting position T)) as shown by solid lines in Fig. 2. Then, the oil-hydraulic cylinder 31 is extended so that the rod 311 extends upward. Following insertion of the protrusion 312 into the hole 40 of the stacking jig 34, the step 313 comes into contact with the bottom of the recess 351, whereby the stacking jig 34 fit to the rod 311 is integrally moved along the vertical direction. That is to say, the stacking jig 34 at the waiting position T is moved upward along the punching direction to the upper-side stacking position (position shown in Fig. 3B (stacking position S)) shown by broken lines shown in Fig. 2. That is to say, the oil-hydraulic cylinder 31 serves as jig-moving means for moving the stacking jig 34 along the punching direction between the stacking position (upper-side stacking position) S and the waiting position (lower-side stacking position) T.

The stacking jig 34 moved to the stacking position S is inserted into the holding hole 112 and the insertion hole 111, and the disk 35 is pressed into contact with the step 113 as shown in Fig. 3B. Accordingly, the stacking jig 34 is set at the stacking position S without positional deviation and turning. Note that while the stacking jig 34 is moved so as to be set at the stacking position S, the upper-end face (the upper-end face 37a of the cylinder) of the stacking jig 34 reaches the straight portion 111a of the aforementioned insertion hole 111 of the die machine 27, whereby the stacking jig 34 is set such that the upper-end face of the stacking jig 34 and the upper-end face 15a of the aforementioned second stator-core die (lower-direction type) 15 are positioned on a single generally flat plane extending in the horizontal direction. That is to say, at the time of stacking the aforementioned stator-core layer sheets 26 on the stacking jig 34 set at the aforementioned stacking position S, the stacking jig 34 and the second stator-core punch 23 provided to the aforementioned die machine 27 for punching out the layer sheet 26 are positioned so as to overlap with each other along the punching direction.

Following setting of the stacking jig 34 at the stacking position S, the second stator-core punch 23 is moved in the vertical direction, whereby the stator-core layer sheet 26 is punched out from the metal material 24. Fig. 3B shows the stator-core layer sheet 26 thus punched out. The ring-shaped stator-core layer sheet 26 thus punched out is stacked on the stacking jig 34 with the center opening 261 thereof fit to the cylinder 37 of the stacking jig 34 so as to extend in the horizontal direction, whereby the axis thereof is aligned. Furthermore, the stator-core layer sheet 26 is stacked with the bolt insertion holes 262 fit to the positioning rods 39 so as to extend in the horizontal direction, whereby the rotational position thereof is aligned. As described above, the stator-core layer sheet 26 is stacked on the stacking jig 34 with the axis aligned by the aforementioned cylinder 37 and the rotational position aligned by the positioning rods 39. Subsequently, the stator-core layer sheet 26 punched out in the next punching step is held by the stacking jig 34 so as to be stacked on the stator-core layer sheet 26 punched out in the previous punching step. That is to say, the stator-core layer sheets 26 punched out is moved along the punching direction without change in direction of the movement, whereby a predetermined number of the stator-core layer sheets 26 are consecutively stacked on the stacking jig 34.

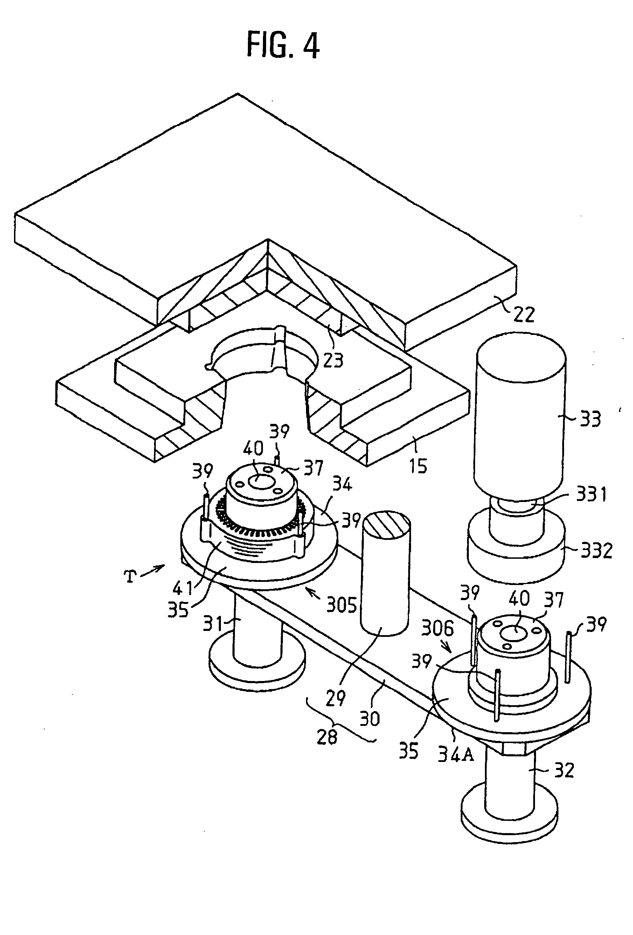

Upon completion of the processing wherein the predetermined number of the stator-core layer sheets 26 have been punched out, the stacking jig 34 holding the predetermined number of the stator-core layer sheets 26 stacked thereon is moved downward from the stacking position S to the waiting position T by the retraction stroke of the oil-hydraulic cylinder 31. Fig. 4 shows the stacking jig 34 holding the predetermined number of the stator-core layer sheets 26 stacked thereon, which have been moved downward to the waiting position T. Note that the predetermined number of the stator-core layer sheets 26 stacked on the stacking jig 34 will be referred to as "preliminary stator core 41" hereafter.

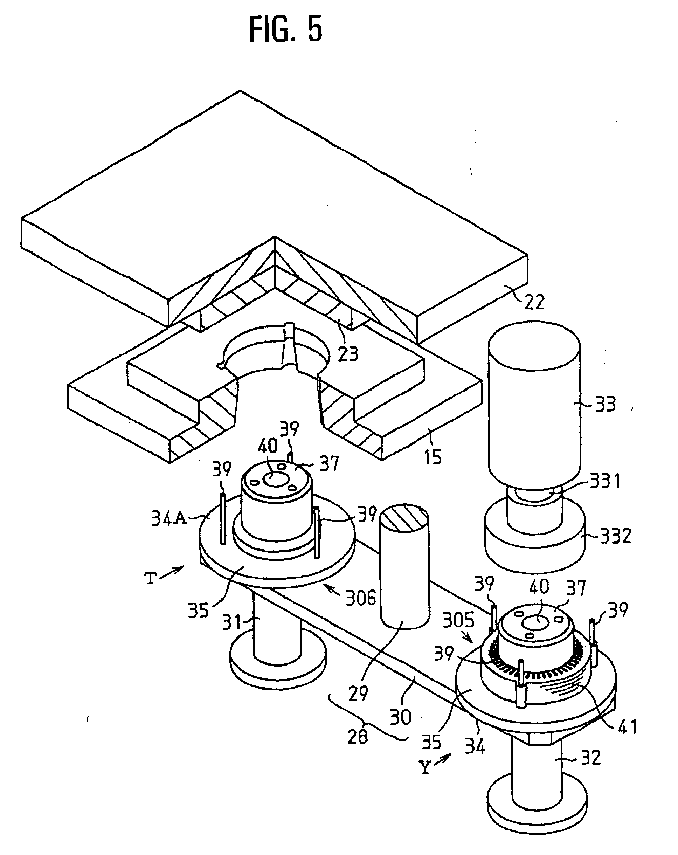

As shown in Fig. 4, while the stacking jig 34 holding the preliminary stator core 41 is set at the waiting position T, a new stacking jig 34A is set on the setting portion 306 on the support base 30 by actions of unshown supply means. Subsequently, the support base 30 is turned by 180° with the support shaft 29 as the center. This turning action sets the new stacking jig 34A at the waiting position T as shown in Fig. 5. At the same time, the stacking jig 34 holding the preliminary stator core 41 is set at the welding position Y between the oil-hydraulic cylinder 32 and the oil-hydraulic cylinder 33 serving as the next-step position away from the punching direction for performing the processing in the next step. That is to say, the carrying device 28 formed of the support shaft 29 and the support base 30 serves as jig-moving means for moving the stacking jig 34 holding the predetermined number of the stator-core layer sheets 26 stacked thereon from the waiting position (stacking position) T to the welding position (next-step position) Y.

As shown in Fig. 6A, following setting of the stacking jig 34 at the welding position Y with the preliminary stator core 41 held thereon, the oil-hydraulic cylinder 32 is operated so as to extend the rod 321 upward. As shown in Fig. 6B, while the protrusion 322 is inserted into the hole 40 of the stacking jig 34, the steps 323 thereof comes into contact with the bottom face of the recess 351 of the stacking jig 34. Thus, the stacking jig 34 set at the welding position Y is held by the extension stroke of the oil-hydraulic cylinder 32 so as not to move downward. In addition, the oil-hydraulic cylinder 33 is extended, whereby the recessed press member 332 comes into contact with the upper face of the preliminary stator core 41. In this state, the recessed press member 332 is pressed into contact with the upper face of the preliminary stator core 41 with the cylinder 37 fit to a recess 333 formed on the press member 332, whereby the stacking jig 34 holding the preliminary stator core 41 is held and set at the welding position Y by actions of the oil-hydraulic cylinder 32 and the oil-hydraulic cylinder 33.

As described above, the preliminary stator core 41 is held by the oil-hydraulic cylinder 32 and the oil-hydraulic cylinder 33 at the welding position Y away from the stacking position along the punching direction, following which welding is performed for the perimeter of the preliminary stator core 41. Welding is performed while moving multiple welding tools 42 along the axial direction of the preliminary stator core 41, whereby the adjacent stator core layer sheets 26 are welded together at the welding portions 26d thereof. That is to say, the stacking jig 34 holding the predetermined number of the stator core layer sheets 26 stacked thereon is transported for the next step, i.e., the welding step, where the processing of the next step, i.e., welding is performed for the preliminary stator core 41.

Following completion of welding for the preliminary stator core 41, the oil-hydraulic cylinders 32 and 33 are operated so as to be retracted, whereby the stator core formed by welding is released from being held by the oil-hydraulic cylinders 32 and 33. Subsequently, while the stator core is transported for the next step, a new stacking jig is set on the setting portion 305.

On the other hand, the stacking jig 34A set at the aforementioned waiting position T by 180° rotation of the aforementioned carrying device 28 is moved upward to the stacking position S within the aforementioned die machine 27 by extension action of the aforementioned oil-hydraulic cylinder 31 as shown in Fig. 6A while the preliminary stator core 41 stacked on the stacking jig 34 is subjected to welding as described above. Then, the stator-core layer sheets 26 punched out by the second stator-core punch 23 are consecutively stacked on the stacking jig 34A. As described above, the present embodiment allows the user to perform the step for stacking the stator-core layer sheets 26 on the stacking jig (e.g., the stacking jig 34A) and the step for welding for the preliminary stator core 41 on the stacking jig (e.g., the stacking jig 34) at the same time.

The present embodiment has the advantages as follows:
(1-1) The preliminary stator core 41 is formed of the multiple stator-core layer sheets 26 stacked on the stacking jig 34 or 34A with the cylinder 37 preventing deviation of the axis of each stator-core layer sheet 26, and with the positioning rods 39 preventing deviation of the rotational position thereof. Accordingly, the present embodiment having such a configuration wherein each stator-core layer sheet 26 is stacked using the stacking jig 34 or 34A has the advantage that each stator-core layer sheets 26 is stacked without damage of the insulation coating while preventing deviation of the axis and deviation of the rotational position, unlike an arrangement disclosed in Patent Document 1 having a problem of damage of the insulating coating, wherein the stator-core layer sheets 26 are stacked with the protrusions and recesses of the adjacent stator-core layer sheets 26 fit one to another.
(1-2) The adjacent stator-core layer sheets 26 are stacked without deviation of the axes thereof and deviation of the rotational positions thereof under the conditions wherein the adjacent stator-core layer sheets 26 are stacked with the center openings 261 thereof matching one another, and with the bolt-insertion openings 262 matching one another. Each of the stacking jigs 34 and 34A include the cylinder 37 for aligning the axis, and the positioning rods 39 for aligning the rotational position, wherein the cylinder 37 and the positioning rods 39 are provided so as to extend along the punching direction for punching out the stator-core layer sheet 26. This configuration allows each stator-core layer sheet 26 to be stacked on the stacking jig 34 or 34A without deviation of the axis thereof and deviation of the rotational position thereof. Thus, the stacking jigs 34 and 34A each of which include the cylinder (first positioning member) 39 for aligning the axis using the center opening 261 of the stator-core layer sheet 26, and the positioning rods (second positioning members) 39 for aligning the rotational position using the bolt insertion openings 262, are suitably employed as a stacking jig for holding the stator-core layer sheets 26 with the axes thereof aligned with each other, and with the rotational positions matching one another.
(1-3) The preliminary stator core 41 is held at the welding position Y between the oil-hydraulic cylinder 32 and the oil-hydraulic cylinder 33 by the press member 332 being pressed contact with the upper face of the preliminary stator core 41. In the aforementioned holding state, the preliminary stator core 41 is set without positional deviation, thereby allowing precise welding for the preliminary stator core 41 at predetermined portions (welding portions 26d of each stator-core layer sheet 26).
(1-4) In some cases, formation of an opening in a predetermined shape or the stator-core layer sheet 26 by punching actions of the first stator-core die 14 and the first stator-core punch 21 leads to a problem of burring. Such burrs may leads to a problem that the preliminary stator core 41 is formed with greater thickness in the stacking direction than predetermined. With the present embodiment, the press member 332 is pressed into contact with the upper face of the preliminary stator core 41, thereby correcting the thickness of the preliminary stator core 41 in the stacking direction to the predetermined thickness. Thus, the oil-hydraulic cylinder 33 including the press member 332 for pressing the upper face of the preliminary stator core 41 is suitably employed as means for correcting the thickness of the preliminary stator core 41 in the stacking direction to the predetermined thickness.
(1-5) The carrying device 28 including the support shaft 29 and the support base 30 for switching the turning position in units of half-turns is suitably employed as means for switching from the stacking jig 34 holding the preliminary stator core 41 to the new stacking jig 34A.
(1-6) The stacking jig 34 holding a predetermined number of stator-core layer sheets 26 stacked thereon at the stacking position S is moved downward to the waiting position T by the retraction stroke of the oil-hydraulic cylinder 31. That is to say, the stacking jig 34 is set on the setting portion 306 which is one of the setting portions of the support base 30. The stacking jig 34 (preliminary stator core 41) set on the setting portion 306 is moved to the welding position Y by the support base 30 being turned with the support shaft 29 as the center by 180°, following which the preliminary stator core 41 is subjected to welding with the welding tools 42. On the other hand, at the same time of welding for the preliminary stator core 41 held by the aforementioned stacking jig 34, the stacking jig 34A set on the other setting portion 306 of the support base 30 is moved to the waiting position T. Then, the stacking jig 34A is moved upward to the stacking position S by the extension stroke of the aforementioned oil-hydraulic cylinder 31, following which the stator-core layer sheets 26 is stacked thereon. This configuration allows the user to perform the step for stacking the stator-core layer sheets 26 on the stacking jig (e.g., the stacking jig 34A) and the step for welding for the preliminary stator core 41 held by the stacking jig (e.g., the stacking jig 34) at the same time, thereby improving manufacturing efficiency for the stator core.
(1-7) Each stator-core layer sheet 26 is stacked on the stacking jig 34 with the cylinder 37 of the stacking jig 34 in contact with the perimeter of the center opening 261 extending in the horizontal direction, and with the positioning rods 39 in contact with the perimeter of the bolt insertion openings 262 extending in the horizontal direction. Note that the stacking jig 34 can be set at the stacking position S within the die machine 27. This configuration allows each stator-core layer sheet 26 punched out by the second stator-core punch 23 to be stacked on the stacking jig 34 with small movement. That is to say, the second stator-core punch 23 punches out the stator-core layer sheet 26 with a short stroke length. This allows the second stator-core punch 23 to punch out each stator-core layer sheet 26 with a short period of time, thereby further improving manufacturing efficiency for the stator core.

Note that other modifications (arrangements) according to the present invention may be made as follows.

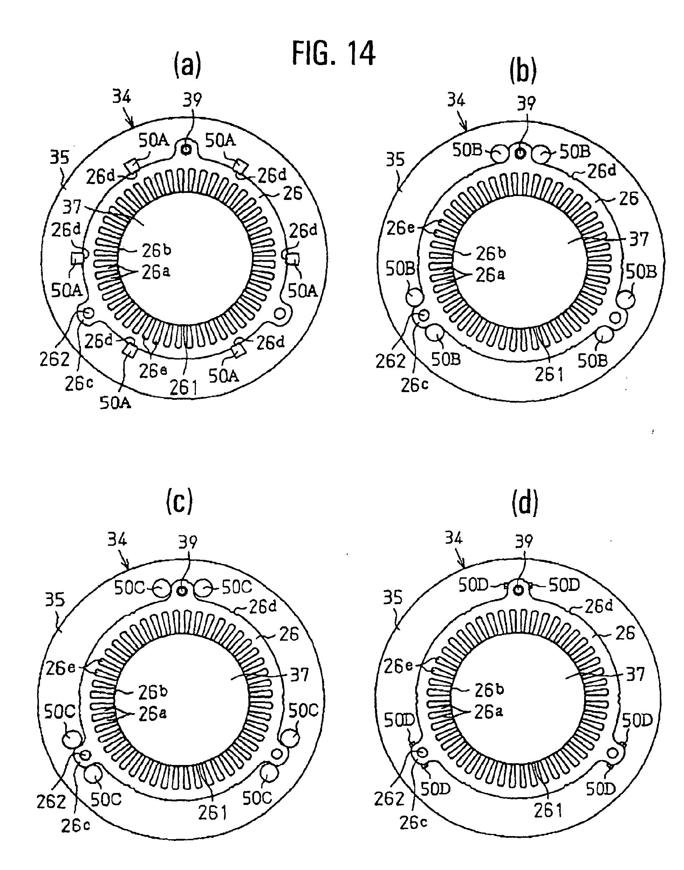

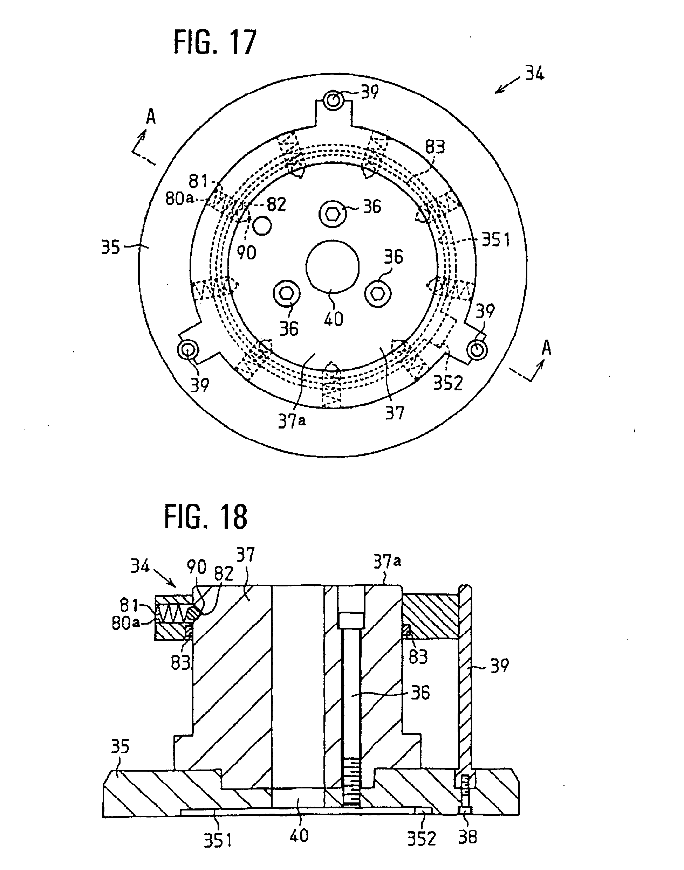

Description has been made regarding an arrangement according to the present embodiment wherein each of the stacking jigs 34 and 34A include the cylinder 37 formed in generally the same outline shape as with the center opening 261, which serves as the first positioning member for aligning the axis of the stator-core layer sheet 26. In the same way, each of the stacking jigs 34 and 34A include the three positioning rods 39 formed in generally the same outline shape as with the bolt insertion openings 262, which serve as the second positioning members for aligning the rotational position of the stator-core layer sheet 26. With the present invention, other modifications of the first positioning member and the second positioning member may be made as follows.

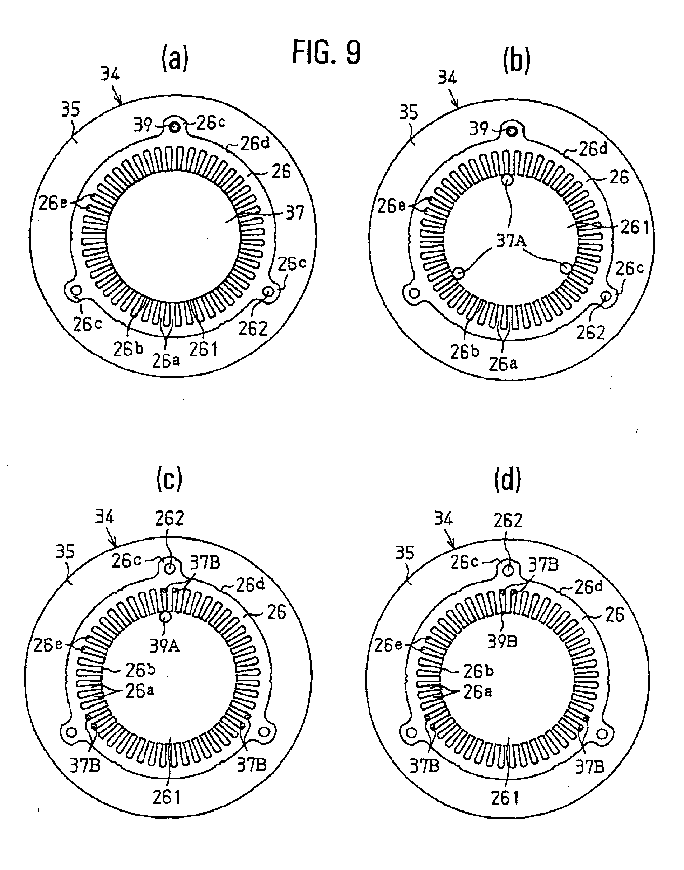

(1) Fig. 9A shows a first modification. The first modification has a configuration wherein the cylinder 37 serves as the first positioning member in the same way as with the present embodiment. On the other hand, a single positioning rod 39 serves as the second positioning member, unlike the present embodiment wherein the three positioning rods 39 serve as the second positioning member. With such a configuration wherein the positioning rods 39 formed in generally the same outline shape as with the bolt insertion openings 262 are employed as the first positioning member, the number of the positioning rods 39 may be determined to be one (or two).
(2) Fig. 9B shows a second modification. The second modification has a configuration wherein three rods 37A are employed as the first positioning member for being engaged along the horizontal direction with the tip corners of the engaging protrusions 26b of the adjacent teeth 26a of the stator-core layer sheet 26. On the other hand, the single positioning rod 39 serves as the second positioning member in the same way as with the first modification. As described above, two or more rods 37A can be employed as the first positioning member. Accordingly, a suitable number of the rods 37A, which is more than two, may be provided to the stacking jig. Note that with a configuration wherein the two rods 37A are employed as the first positioning member, the two rods 37A must be arrayed at positions point-symmetrical with regard to the center of the center opening 261.
(3) Fig. 9C shows a third modification. The third modification has a configuration wherein six (two rods serves as one pair) rods 37B are employed as the first positioning member for being engaged along the horizontal direction with the base ends of the aforementioned teeth 26a on both sides. On the other hand, a suitable number (one in Fig. 9C) of positioning rods 39A are employed as the second positioning member for being engaged along the horizontal direction with the point corners of the engaging protrusions 26b of the teeth 26a adjacent one to another. Note that while description has been made regarding a modification with reference to Fig. 9C wherein the six (two serve as a pair) rods 37B are engaged with the base ends of the three teeth 26a on both sides, an arrangement may be made wherein the number of the rods 37B is determined to be twice the number (e.g., three or more) of the teeth 26a which are to be engaged.
(4) Fig. 9D shows a fourth modification. The fourth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 9D) of the positioning rods 39B are employed as the second positioning member for being engaged along the horizontal direction with the side edges of the engaging protrusions 26b of the teeth 26a adjacent one to another.

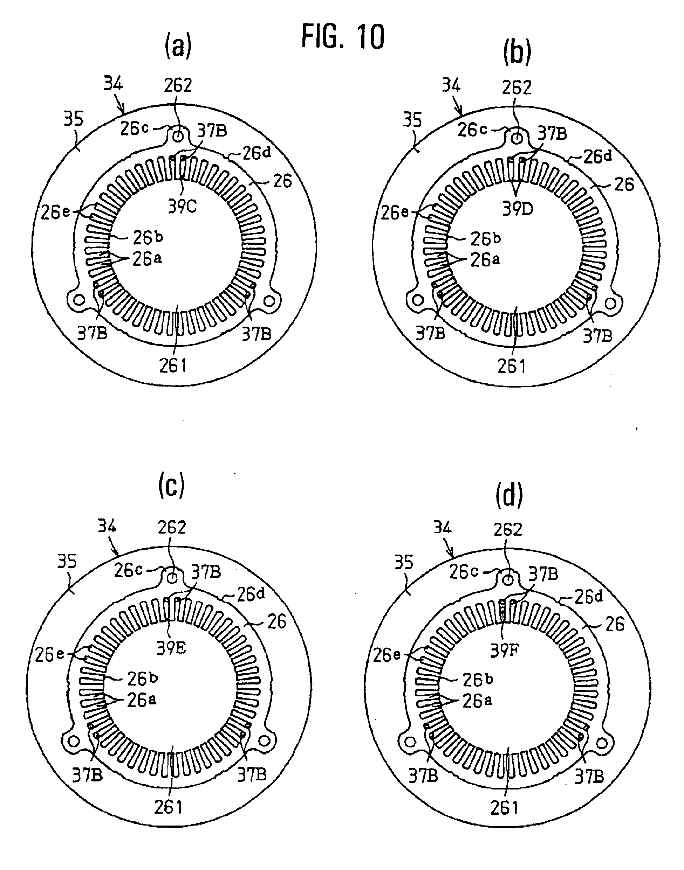

(5) Fig. 10A shows a fifth modification. The fifth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 10A) of positioning rods 39C are employed as the second positioning member for being engaged along the horizontal direction with the corners formed in the outside direction of the radius of the aforementioned stator-core layer sheet 26, which are parts of the engaging protrusions 26b of the teeth 26a adjacent one to another.
(6) Fig. 10B shows a sixth modification. The sixth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, two positioning rods 39D are employed as the second positioning member for being engaged with the base ends of the engaging protrusions 26b protruding from the aforementioned teeth 26a on both sides. Note that while description has been made regarding a modification with reference to Fig. 10B wherein the six (two serve as a pair) rods 39D are engaged with the base ends of the engaging protrusions 26b of the three teeth 26a on both sides, an arrangement may be made wherein the number of the rods 39D is determined to be twice the number (e.g., three or more) of the teeth 26a which are to be engaged.
(7) Fig. 10C shows a seventh modification. The seventh modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 10C) of positioning rods 39E are employed as the second positioning member for being engaged along the horizontal direction with the side edges extending from the base ends of the engaging protrusions 26b in the circumference direction.
(8) Fig. 10D shows an eighth modification. The eighth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 10D) of positioning rods 39F are employed as the second positioning member for being engaged along the horizontal direction with the side edges of the adjacent teeth 26a forming the slots 26e therebetween.

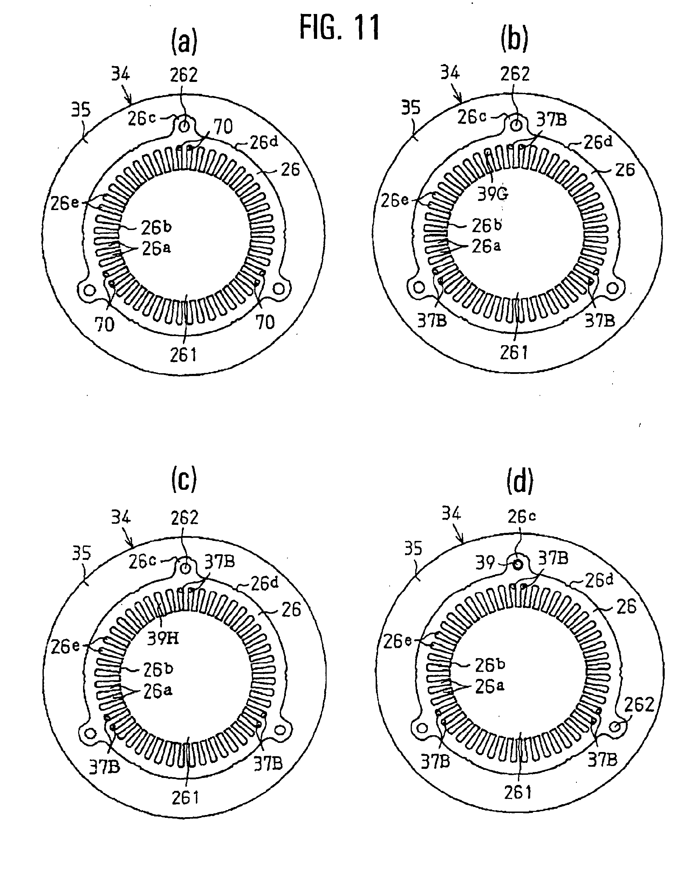

(9) Fig. 11A shows a ninth modification. The ninth modification has a configuration wherein six (two rods serves as one pair) rods 70 are employed as the first positioning member and the second positioning member for being engaged along the horizontal direction with the base ends of the aforementioned teeth 26a on both sides, thereby setting the stator-core layer sheet 26 with the aligned axis and aligned rotational position.
(10) Fig. 11B shows a tenth modification. The tenth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 11B) of positioning rods 39G are employed as the second positioning member for being engaged along the horizontal direction with the bottoms of the aforementioned slots 26e close to the outside of the stator-core layer sheet 26.
(11) Fig. 11C shows an eleventh modification. The eleventh modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, a suitable number (one in Fig. 11C) of positioning rods 39H formed in generally the same outline shape as with the aforementioned slot 26e are employed as the second positioning member.
(12) Fig. 11D shows a twelfth modification. The twelfth modification has a configuration wherein the six (two rods serves as one pair) rods 37B are employed as the first positioning member for being engaged along the horizontal direction with the base ends of the aforementioned teeth 26a on both sides in the same way as with the third modification. On the other hand, the single (or two) positioning rod 39 is employed as the second positioning member as with the first modification.

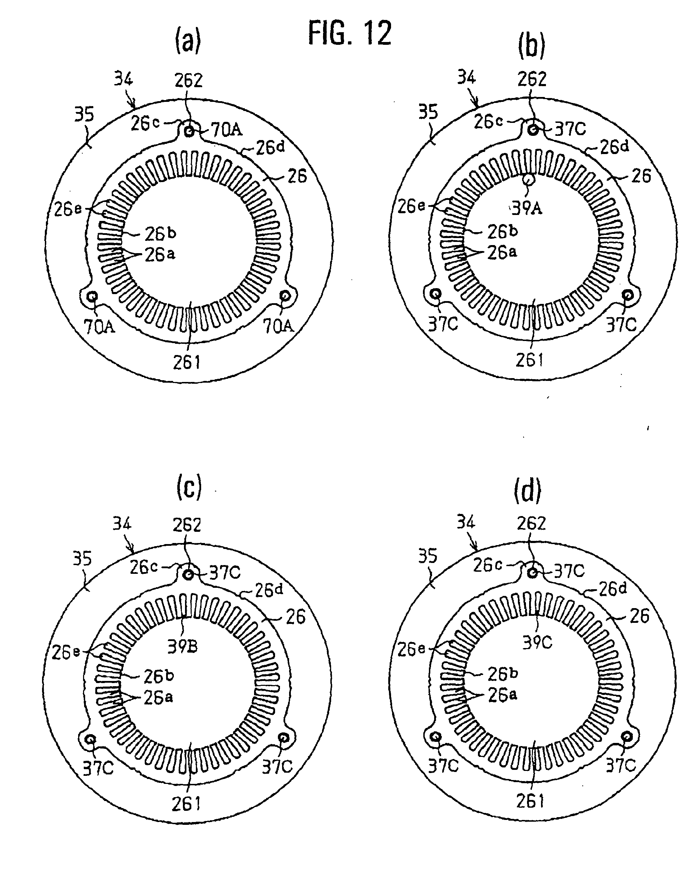

(13) Fig. 12A shows a thirteenth modification. The thirteenth modification has a configuration wherein three rods 70A are employed as the first positioning member and the second positioning member for being engaged along the horizontal direction with the perimeters of the bolt insertion openings 262, thereby enabling alignment of the axis of the stator-core layer sheet 26 and alignment of the rotational position thereof. Note that an arrangement may be made wherein the two rods 70A are employed.
(14) Fig. 12B shows a fourteenth modification. The fourteenth modification has a configuration wherein three rods 37C are employed as the first positioning member for being engaged along the horizontal direction with the perimeters which define the shape of the bolt insertion openings 262. On the other hand, a suitable number (one in Fig. 12B) of positioning rods 39A are employed as the second positioning member in the same way as with the third modification.
(15) Fig. 12C shows a fifteenth modification. The fifteenth modification has a configuration wherein the three rods 37C are employed as the first positioning member for being engaged along the horizontal direction with the perimeters which define the shape of the bolt insertion openings 262 in the same way as with the fourteenth modification. On the other hand, a suitable number (one in Fig. 12C) of the positioning rods 39B are employed as the second positioning member for being engaged along the horizontal direction with the side edges of the engaging protrusions 26b of the teeth 26a adjacent one to another in the same way as with the fourth modification.
(16) Fig. 12D shows a sixteenth modification. The sixteenth modification has a configuration wherein the three rods 37C are employed as the first positioning member for being engaged along the horizontal direction with the perimeters which define the shape of the bolt insertion openings 262 in the same way as with the fourteenth modification. On the other hand, a suitable number (one in Fig. 12D) of the positioning rods 39C are employed as the second positioning member for being engaged along the horizontal direction with the corners formed in the outside direction of the radius of the aforementioned stator-core layer sheet 26, which are parts of the engaging protrusions 26b of the teeth 26a adjacent one to another, in the same way as with the fifth modification.

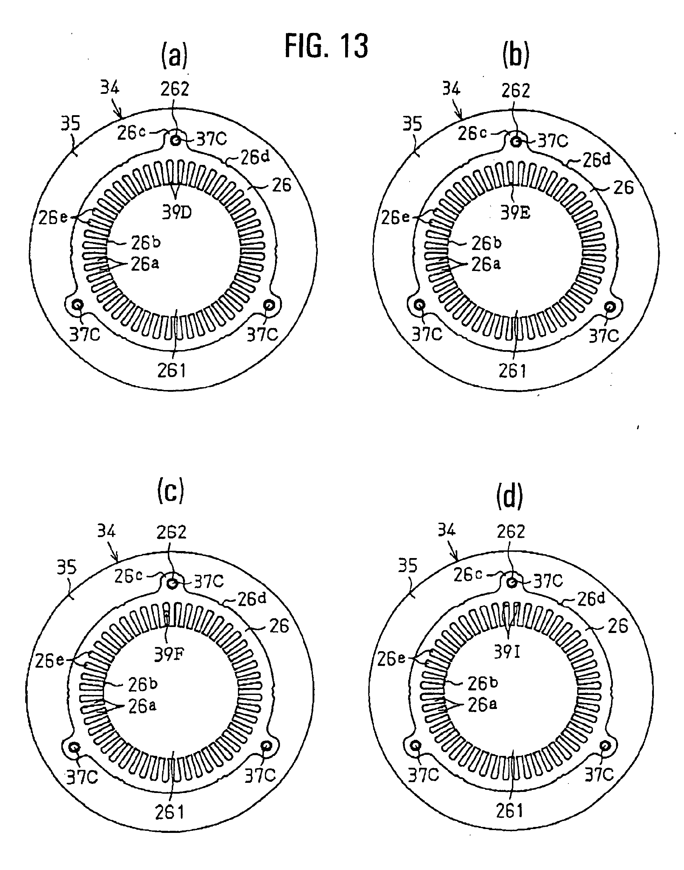

(17) Fig. 13A shows a seventeenth modification. The seventeenth modification has a configuration wherein the three rods 37C are employed as the first positioning member for being engaged along the horizontal direction with the perimeters which define the shape of the bolt insertion openings 262 in the same way as with the fourteenth modification. On the other hand, the two positioning rods 39D are employed as the second positioning member for being engaged with the base ends of the engaging protrusions 26b protruding from the aforementioned teeth 26a on both sides in the same way as with the sixth modification.
(18) Fig. 13B shows an eighteenth modification. The eighteenth modification has a configuration wherein the three rods 37C are employed as the first positioning member for being engaged along the horizontal direction with the perimeters which define the shape of the bolt insertion openings 262 in the same way as with the fourteenth modification. On the other hand, a suitable number (one in Fig. 13B) of the positioning rods 39E are employed as the second positioning member for being engaged along the horizontal direction with the side edges extending from the base ends of the engaging protrusions 26b in the circumference direction in the same way as with the seventh modification.
(19) Fig. 13C shows a nineteenth modification. The nineteenth modification has a configuration wherein the three rods 37C are employed as the first positioning member for being engaged along the horizontal direction with the perimeters which define the shape of the bolt insertion openings 262 in the same way as with the fourteenth modification. On the other hand, a suitable number (one in Fig. 13C) of the positioning rods 39F are employed as the second positioning member for being engaged along the horizontal direction with the side edges of the adjacent teeth 26a forming the slots 26e therebetween in the same way as with the eighth modification.
(20) Fig. 13D shows a twentieth modification. The twentieth modification has a configuration wherein the three rods 37C are employed as the first positioning member for being engaged along the horizontal direction with the perimeters which define the shape of the bolt insertion openings 262 in the same way as with the fourteenth modification. On the other hand, a suitable number (one in Fig. 13D) of positioning rods 39I are employed as the second positioning member for being engaged along the horizontal direction with the base ends of the teeth 26a of the stator-core layer sheet 26.
   As described above, description has been made regarding an arrangement according to the present embodiment wherein the stator-core layer sheet 26 is set with the axis aligned by the cylinder 37 and with the rotational position aligned by the three positioning rods 39. Furthermore, an arrangement may be made wherein auxiliary positioning members are provided so as to extend along the punching direction for being engaged along the horizontal direction with the outer perimeter forming the outline shape of the stator-core layer sheet 26 as described in the following modifications, as well as the cylinder 37 for aligning the axis thereof, and the positioning rods 39 for aligning the rotational position thereof. Note that Figs. 14A through 15B show the stacking jig 34 described in the above first modification, further including various kinds of the auxiliary positioning members formed in various shapes.
(21) Fig. 14A shows a twenty-first modification. The twenty-first modification has a configuration wherein six auxiliary positioning members 50A are provided for being engaged along the horizontal direction with the welding portions 26d of the stator-core layer sheet 26. Note that a suitable number between one to six of the auxiliary positioning members 50A may be provided. In this case, the arrangement further includes driving means for removing the auxiliary positioning members 50A from the aforementioned welding portions 26d at the time of welding for the preliminary stator core 41.
(22) Fig. 14B shows a twenty-second modification. The twenty-second modification has a configuration wherein six (two serve as one pair) auxiliary positioning members 50B are provided for being engaged along the horizontal direction with the base ends of the flanges 26c of the stator-core layer sheet 26 on both sides. Note that a suitable number of the auxiliary positioning members 50B, two or four, may be provided.
(23) Fig. 14C shows a twenty-third modification. The twenty-third modification has a configuration wherein six (two serve as one pair) auxiliary positioning members 50C are provided for being engaged along the horizontal direction with the perimeters of the flanges 26c of the stator-core layer sheet 26 on both sides. Note that a suitable number of the auxiliary positioning members 50C, two or four, may be provided.
(24) Fig. 14D shows a twenty-fourth modification. The twenty-fourth modification has a configuration wherein six (two serve as one pair) auxiliary positioning members 50D are provided for being engaged along the horizontal direction with the point corners of the flanges 26c of the stator-core layer sheet 26. Note that a suitable number of the auxiliary positioning members 50D, two or four, may be provided.

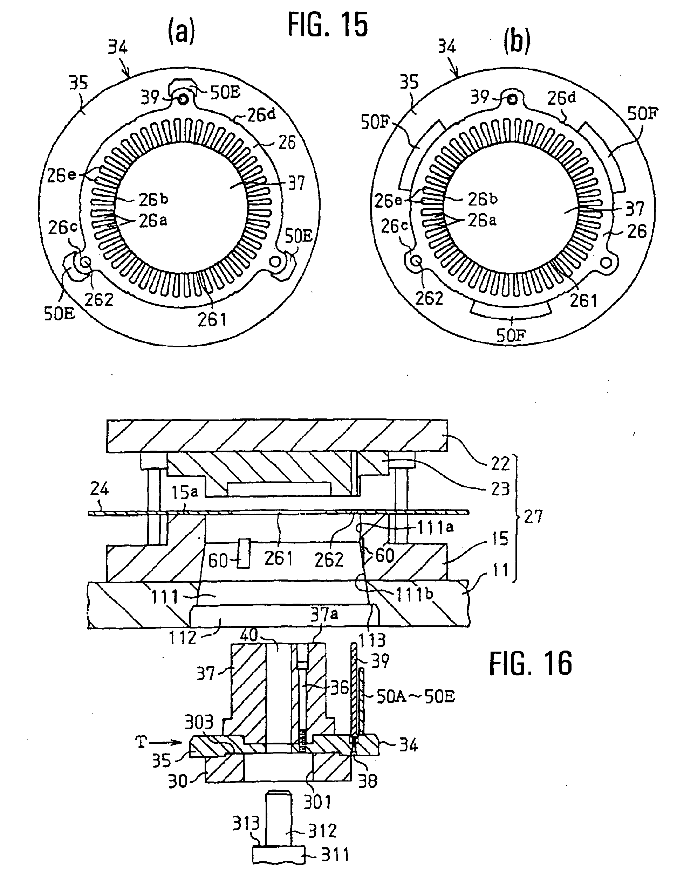

(25) Fig. 15A shows a twenty-fifth modification. The twenty-fifth modification has a configuration wherein three auxiliary positioning members 50E are provided for being engaged along the horizontal direction with the protruding perimeters of the flanges 26c. Note that a suitable number of the auxiliary positioning members 50E, one or two, may be provided.
(26) Fig. 15B shows a twenty-sixth modification. The a twenty-sixth modification has a configuration wherein auxiliary positioning members 50F are provided for being engaged along the horizontal direction with the outer perimeter of the aforementioned stator-core layer sheet 26 between the welding portions 26d, other than the flanges 26c, thereby assisting alignment of the axis thereof by the cylinder 37.
   With the aforementioned modifications having such configurations, the stacking jig 34 holds the stator-core layer sheets 26 which have been moved along the aforementioned punching direction with the aligned axes thereof and aligned rotational positions in a surer manner. Note that each of the stacking jig 34 shown in the aforementioned second modification through twentieth modification may include one set of the auxiliary positioning members 50A through 50F shown in the aforementioned twenty-first modification through twenty-sixth modification. Furthermore, the stacking jig 34 may include only one set of the auxiliary positioning members 50A through 50F for aligning the axes of the stator-core layer sheets 26.
   With an arrangement employing the stacking jig 34 including one set of the aforementioned auxiliary positioning members 50A through 50F, the arrangement includes grooves 60 formed on the inner face of the insertion hole 111 which allows insertion of the auxiliary positioning members (e.g., the auxiliary positioning members 50E), as shown in Fig. 16. Specifically, the grooves 60 are formed up to a predetermined position at the height lower than the lower dead point of the second stator-core punch 23 for punching out the stator-core layer sheet 26. This configuration allows the stacking jig 34 including the auxiliary positioning members to be moved upward to the stacking position S. Note that Fig. 16 shows an arrangement wherein the stacking jig 34 according to the twenty-fifth modification shown in Fig. 15A is employed. Note that the aforementioned grooves 60 are formed at a different position and in a different shape corresponding to the shape and the position of the employed auxiliary positioning member set selected from the auxiliary positioning members 50A through 50F.
(27) Furthermore, an arrangement may be made wherein a turn table is set on the tip of the rod 311 of the oil-hydraulic cylinder 31, the stacking jig 34 is set on the turn table, and the stacking jig 34 is moved in the vertical direction between the waiting position T and the stacking position S. In this case, an arrangement may be made wherein following stacking of 1/3 of the predetermined number of the stator-core layer sheets 26 on the stacking jig 34, the turn table is turned by 1/3 revolution, for example. In this case, following further stacking of 1/3 of the predetermined number of the stator-core layer sheets 26 on the stacking jig 34, the turn table is further turned by 1/3 revolution, and so on in the same way, for example. This configuration allows the stator-core layer sheets 26 to be stacked while compensating deviation of the thickness of the single preliminary stator core 41 due to deviation of the thickness of the metal material 24.
   In this case, an arrangement may be made wherein the perimeter of the turn table is formed as a gear portion. With such a configuration, upon the stacking jig 34 being set on the stacking position S, a driving gear meshes with the aforementioned gear portion. In this case, a driving motor is provided around the base 11 for driving the driving gear.
   Alternatively, an arrangement may be made wherein the gear portion of the turn table meshes with the driving gear beforehand, and the driving motor is set on the rod 311 of the oil-hydraulic cylinder 31.
(28) The present invention may be applied to a manufacturing method for the rotor core.
(29) The aforementioned stacking jig 34 according to the present embodiment may include a slidable support member 80 formed generally in the shape of a ring which is to be slidable fit to the cylinder 37 along the axial direction as shown in Figs. 17 and 18. The slidable support member 80 includes multiple (nine in Fig. 17) through holes 80a passing through the slidable support member 80 in the radial direction at the same pitch. Each through hole 80a includes a spring 81, wherein the base end of the spring 81 (the left end in Fig. 18) is fixed on the inner face of the aforementioned through hole 80a. Furthermore, an engaging ball 82 is fixed to the tip (the right end in Fig. 18) of the spring 81. Note that a ring-shaped oil seal (e.g., O-ring or the like) 83 is provided on the outer circumference of the aforementioned cylinder 37 by friction underneath the opening of the aforementioned holes 80a as shown in Fig. 18.

On the other hand, multiple (nine in Fig. 17) notches 90 are formed at the upper portions on the outer circumference of the cylinder 37, which allow the aforementioned engaging balls 82 pressed toward the center of the cylinder 37 due to the pressing force of the aforementioned springs 81 to be fit thereto. This configuration allows the engaging balls 82 to be fit to these notches 90, thereby holding the aforementioned slidable support member 80 at generally the same height as with the notches 90.

Upon stacking the stator-core layer sheet 26 punched out by the die machine 27 (second stator-core punch 23) on the aforementioned slidable support member 80, the slidable support member 80 is pressed downward by the punch 23 of the die machine 27 by a distance corresponding to the thickness of the single stator-core layer sheet 26 through the stator-core layer sheet 26 thus punched out. Then, the engaging balls 82 fit to the aforementioned notches 90 come out from the corresponding notches 90, and accordingly, the aforementioned slidable support member 80 is moved downward along the axial direction of the cylinder 37.

The slidable support member 80 includes the aforementioned oil seal 83. Accordingly, following the slidable support member 80 moving downward by the thickness of the single stator-core layer sheet 26, the slidable support member 80 is kept stationary by friction between the outer circumference of the cylinder 37 and the oil seal 83. Subsequently, upon the next stator-core layer sheet 26 punched out by the die machine 27 being moved downward by pressing action of the punch 23, the slidable support member 80 is further moved down by the thickness of the single stator-core layer sheet 26. In the same way, the slidable support member 80 is moved down by the thickness of the single stator-core layer sheet 26 for each action wherein the stator-core layer sheet 26 is punched out by the die machine 27.

## Claims

1. A manufacturing method for a motor layered core wherein a sheet metal material is punched so as to form a layer sheet in a predetermined shape, and a plurality of said layer sheets are stacked so as to form a motor layered core,
and wherein a stacking jig is set at a lower-side stacking position along the punching direction underneath a die machine for punching said metal material for holding said layer sheets with the aligned axes and aligned rotational positions, and wherein said stacking jig is moved upward to the upper-side stacking position along the punching direction within said die machine, and wherein said layer sheet punched out by said die machine is moved along the punching direction so as to be consecutively stacked on said stacking jig set at said upper-side stacking position.

2. A manufacturing method for a motor layered core according to Claim 1, wherein said stacking jig is moved from said lower-side stacking position to said upper-side stacking position such that the upper-end face of said stacking jig is moved at least to a straight portion extending along said punching direction in generally the same shape as the outline shape of said layer sheet, which is a part of an insertion hole formed within said die machine.

3. A manufacturing method for a motor layered core according to Claim 1, wherein said stacking jig is moved from said lower-side stacking position to said upper-side stacking position such that the upper-end face of the stacking jig and the upper-end face of the lower die of said die machine are positioned on a single generally flat plane extending.

4. A manufacturing method for a motor layered core according to Claim 1, wherein said stacking jig is set such that at the time of stacking said layer sheets at said upper-side stacking position, the stacking jig overlaps with the punch positioned within said die machine along the punching direction.

5. A manufacturing method for a motor layered core wherein a sheet metal material is punched so as to form a layer sheet in a predetermined shape, and a plurality of said layer sheets are stacked so as to form a motor layered core,
and wherein a stacking jig is set at a stacking position along the layer-sheet punching direction for holding said layer sheets with the aligned axes and aligned rotational positions, and wherein said layer sheets thus punched out are moved in the punching direction so as to be consecutively stacked on said stacking jig, and wherein said stacking jig holding a predetermined layer sheets stacked thereon is moved to a next-step position away from said layer-sheet punching direction for performing processing in the next step.

6. A manufacturing method for a motor layered core according to Claim 5, wherein said predetermined number of layer sheets stacked on said stacking jig are subjected to processing in said next step.

7. A manufacturing apparatus for a motor layered core wherein a sheet metal material is punched so as to form a layer sheet in a predetermined shape, and a plurality of said layer sheets are stacked so as to form a motor layered core, comprising:
a die machine for punching said metal material;
a stacking jig set at a stacking position along the punching direction, along which said layer is to be punched out by said die machine, for stacking and holding said layer sheets which have been moved along said punching direction with aligned axes and aligned rotational positions; and
jig moving means for moving said stacking jig between an upper-side stacking position within said die machine and a lower-side stacking position underneath said die machine along said layer-sheet punching direction.

8. A manufacturing apparatus for a motor layered core according to Claim 7, wherein said stacking jig is moved by said jig moving means from said lower-side stacking position to said upper-side stacking position such that the upper-end face of said stacking jig is moved at least to a straight portion extending along said punching direction in generally the same shape as the outline shape of said layer sheet, which is a part of an insertion hole formed within said die machine.

9. A manufacturing apparatus for a motor layered core according to Claim 7, wherein said stacking jig is moved by said jig moving means from said lower-side stacking position to said upper-side stacking position such that the upper-end face of the stacking jig and the upper-end face of the lower die of said die machine are positioned on a single generally flat plane extending.

10. A manufacturing apparatus for a motor layered core according to Claim 7, wherein said stacking jig is disposed such that at the time of said jig moving means moving said stacking jig to said upper-side stacking position, the stacking jig overlaps with a punch positioned within said die machine along the layer-sheet-punching direction.

11. A manufacturing apparatus for a motor layered core according to any one of claims 7 to 10, wherein said stacking jig includes a positioning member having functions for aligning the axes and rotational positions of said layer sheets, and wherein said positioning member is provided so as to extend along said layer-sheet punching direction, and wherein said positioning member has a configuration for being engaged along the horizontal direction with the perimeter of said layer sheet stacked on said stacking jig.

12. A manufacturing apparatus for a motor layered core wherein a sheet metal material is punched so as to form a layer sheet in a predetermined shape, and a plurality of said layer sheets are stacked so as to form a motor layered core, comprising:
a die machine for punching said metal material;
a stacking jig set at a stacking position along the punching direction, along which said layer sheet is to be punched out by said die machine, for stacking and holding said layer sheets which have been moved along said punching direction with aligned axes and aligned rotational positions; and
jig moving means for moving said stacking jig holding a predetermined number of said layer sheets from said stacking position to a next-step position away from said layer-sheet punching direction for performing processing in said next step.

13. A manufacturing apparatus for a motor layered core according to Claim 12, wherein said stacking jig includes a positioning member having functions for aligning the axes and rotational positions of said layer sheets, and wherein said positioning member is provided so as to extend along said layer-sheet punching direction, and wherein said positioning member has a configuration for being engaged along the horizontal direction with the perimeter of said layer sheet stacked on said stacking jig.

14. A stacking jig for holding layer sheets stacked along the punching direction, said layer sheets being punched out in a predetermined shape from a sheet metal material by a die machine so as to form a motor layered core; including a positioning member for being engaged along the horizontal direction with the perimeter other than the outer perimeter which defines the outline shape of said stacked layer sheets, thereby enabling positioning of said layer sheets with aligned axes and aligned rotational positions.

15. A stacking jig according to Claim 14, wherein said positioning member has a configuration for being engaged along the horizontal direction with at least one of the inner perimeter which defines the inner outline of said layer sheet and the opening perimeter which defines the shape of an opening punched on said layer sheet.

16. A stacking jig according to Claims 14, or 15, wherein said positioning member is formed of a first positioning member for aligning the axes of said layer sheets, and a second positioning member for aligning the rotational positions of said layer sheets.

17. A stacking jig according to Claim 16, wherein said layer sheet is a stator-core layer sheet,
and wherein said first positioning member is engaged along the horizontal direction with the inner perimeter which defines the inner outline of said stator-core layer sheet, and wherein said second positioning member is engaged along the horizontal direction with the opening perimeter which defines the shape of an opening punched on said stator-core layer sheet.

18. A stacking jig according to Claim 16, wherein said layer sheet is a stator-core,layer sheet including a plurality of openings and teeth having protrusions at the tips thereof formed by punching so as to protrude along the circumference direction of said stator-core layer sheet, and wherein said first positioning member is engaged along the horizontal direction with the tip corners of said protrusions of said teeth adjacent one to another, and wherein said second positioning member is engaged along the horizontal direction with the opening perimeter which defines the shape of said opening.

19. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides,
and wherein said second positioning member is engaged along the horizontal direction with the tip corners of said protrusions of said teeth adjacent one to another.

20. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction with the side perimeters of said protrusion of said teeth adjacent one to another.

21. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction with the corners formed in the outside direction of the radius of the aforementioned stator-core layer sheet, which are parts of said protrusions of said teeth adjacent one to another.

22. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction with the base ends of said protrusions on both sids.

23. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction with the side perimeters of said protrusions each of which extend from the base end of said protrusion along the circumference direction.

24. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction by being fit to a slot formed between the side perimeters of said teeth adjacent one to another.

25. A stacking jig according to Claim 16, wherein said layer sheet is a stator-core layer sheet including a plurality of teeth formed by punching,
and wherein said first positioning member is engaged along the horizontal direction with the base ends of said teeth on both sides, and wherein said second positioning member is engaged along the horizontal direction with the base ends of said teeth on both sides.

26. A stacking jig according to Claim 16, wherein said layer sheet is a stator-core layer sheet including teeth having protrusions at the tips thereof formed by punching so as to protrude along the circumference direction of said stator-core layer sheet,
and wherein said first positioning member is engaged along the horizontal direction with the base ends of said teeth on both sides, and wherein said second positioning member is engaged along the horizontal direction with the bottom of a slot formed between said teeth adjacent one to another.

27. A stacking jig according to Claim 16, wherein said layer sheet is a stator-core layer sheet including teeth having protrusions at the tips thereof formed by punching so as to protrude in the circumference direction of said stator-core layer sheet,
and wherein said first positioning member is engaged along the horizontal direction with the base ends of said teeth on both sides, and wherein said second positioning member is engaged along the horizontal direction with the side perimeters which define the outline shape of said teeth adjacent one to another so as to be fit to a slot formed between said teeth adjacent one to another.

28. A stacking jig according to Claim 16, wherein said layer sheet is a stator-core layer sheet including a plurality of openings and a plurality of teeth formed by punching,
and wherein said first positioning member is engaged along the horizontal direction with the base ends of said teeth on both sides, and wherein said second positioning member is engaged along the horizontal direction with the opening perimeters which define the shape of said openings.

29. A stacking jig according to Claim 16, wherein said layer sheet is a stator-core layer sheet including a plurality of openings formed by punching,
and wherein said first positioning member is engaged along the horizontal direction with the opening perimeters which define the shape of said openings,
and wherein said second positioning member is engaged along the horizontal direction with the opening perimeters which define the shape of said openings.

30. A stacking jig according to Claim 16, wherein said layer sheet is a stator-core layer sheet including a plurality of openings and teeth having protrusions at the tips thereof so as to protrude along the circumference direction of said stator-core layer sheet, which are formed by punching,
and wherein said first positioning member is engaged along the horizontal direction with the opening perimeters which define the shape of said openings, and wherein said second positioning member is engaged along the horizontal direction with the tip corners of said protrusions of said teeth adjacent one to another.

31. A stacking jig according to Claim 16, wherein said layer sheet is a stator-core layer sheet including a plurality of openings and teeth having protrusions at the tips thereof so as to protrude along the circumference direction of said stator-core layer sheet, which are formed by punching,
and wherein said first positioning member is engaged along the horizontal direction with the opening perimeters which define the shape of said openings, and wherein said second positioning member is engaged along the horizontal direction with the side perimeters of said protrusions of said teeth adjacent one to another.

32. A stacking jig according to Claim 16, wherein said layer sheet is a stator-core layer sheet including a plurality of openings and teeth having protrusions at the tips thereof so as to protrude along the circumference direction of said stator-core layer sheet, which are formed by punching,
and wherein said first positioning member is engaged along the horizontal direction with the opening perimeters which define the shape of said openings, and wherein said second positioning member is engaged along the horizontal direction with the corners formed in the outside direction of the radius of the aforementioned stator-core layer sheet, which are parts of said protrusions of said teeth adjacent one to another.

33. A stacking jig according to Claim 16, wherein said layer sheet is a stator-core layer sheet including a plurality of openings and teeth having protrusions at the tips thereof so as to protrude along the circumference direction of said stator-core layer sheet, which are formed by punching,
and wherein said first positioning member is engaged along the horizontal direction with the opening perimeters which define the shape of said openings, and wherein said second positioning member is engaged along the horizontal direction with the base ends of said protrusions on both sides.

34. A stacking jig according to Claim 16, wherein said layer sheet is a stator-core layer sheet including a plurality of openings and teeth having protrusions at the tips thereof so as to protrude along the circumference direction of said stator-core layer sheet, which are formed by punching,
and wherein said first positioning member is engaged along the horizontal direction with the opening perimeters which define the shape of said openings, and wherein said second positioning member is engaged along the horizontal direction with the side perimeters of said protrusions each of which extend from the base end of said protrusion along the circumference direction.

35. A stacking jig according to Claim 16, wherein said layer sheet is a stator-core layer sheet including a plurality of openings and teeth formed by punching,
and wherein said first positioning member is engaged along the horizontal direction with the opening perimeters which define the shape of said openings, and wherein said second positioning member is engaged along the horizontal direction by being fit to a slot formed between the side perimeters of said teeth adjacent one to another.

36. A stacking jig according to Claim 16, wherein said layer sheet is a stator-core layer sheet including a plurality of openings and teeth formed by punching,
and wherein said first positioning member is engaged along the horizontal direction with the opening perimeters which define the shape of said openings, and wherein said second positioning member is engaged along the horizontal direction with the base ends of said teeth on both sides.

37. A stacking jig according to any one of the Claims 14 to 36, further including an auxiliary positioning member provided so as to extend along said layer-sheet punching direction for being engaged along the horizontal direction with said outer perimeter of said layer sheet, thereby assisting at least alignment of the axis, as well as alignment of the axis and alignment of the rotational position performed by said positioning member.

38. A stacking jig according to Claim 37, further including a guide hole for guiding said layer sheet punched out by a punch included in said die machine, wherein at least the upper portion of said guide hole is formed in generally the same shape as the outline shape of said layer sheet,
and wherein said guide hole includes a groove formed on the inner face thereof up to a predetermined height underneath the lower dead point of said punch for punching out said layer sheet, which allows insertion of said auxiliary positioning member.

39. A stacking jig according to Claim 37, wherein said layer sheet is a stator-core layer sheet including a plurality of welding portions formed by punching the outer perimeter which defines the outline shape of said stator-core layer sheet,
and wherein said auxiliary positioning member is engaged along the horizontal direction with said welding portions.

40. A stacking jig according to Claim 37, wherein said layer sheet is a stator-core layer sheet including a plurality of flanges formed by punching the outer perimeter which defines the outline shape of said stator-core layer sheet,
and wherein said auxiliary positioning member is engaged along the horizontal direction with the base ends of said flanges on both sides.

41. A stacking jig according to Claim 37, wherein said layer sheet is a stator-core layer sheet including a plurality of flanges formed by punching the outer perimeter which defines the outline shape of said stator-core layer sheet,
and wherein said auxiliary positioning member is engaged along the horizontal direction with the perimeters of said flanges on both sides.

42. A stacking jig according to Claim 37, wherein said layer sheet is a stator-core layer sheet including a plurality of flanges formed by punching the outer perimeter which defines the outline shape of said stator-core layer sheet,
and wherein said auxiliary positioning member is engaged along the horizontal direction with the tip corners of said flanges.

43. A stacking jig according to Claim 37, wherein said layer sheet is a stator-core layer sheet including a plurality of flanges formed in the shape of an arc by punching the outer perimeter which defines the outline shape of said stator-core layer sheet,
and wherein said auxiliary positioning member is engaged along the horizontal direction with the tips formed in the shape of an arc on said flanges.

44. A stacking jig according to Claim 37, wherein said layer sheet is a stator-core layer sheet including a plurality of welding portions and a plurality of flanges by punching the outer perimeter which defines the outline shape of said stator-core layer sheet,
and wherein said auxiliary positioning member is engaged along the horizontal direction with the perimeter between the welding portions, other than the flanges.
